# EUROPÄISCHE PATENTANMELDUNG

(11) **EP 4 616 994 A1**
(43) Veröffentlichungstag der Anmeldung: **17.09.2025**
(21) Anmeldenummer: 24162540.9
(22) Anmeldetag: 11.03.2024
(51) Int. Cl.: B23P 19/027, B25B 27/02, B23B 31/20, B23B 31/117, B23C 5/10, B23Q 3/155

(54) **SPANNVORRICHTUNG ZUM LÖSBAREN EINSPANNEN EINES WERKZEUGS**

(71) Anmelder: Rego-Fix AG, 4456 Tenniken (CH)
(72) Erfinder: Ackeret, Roman, 4313 Möhlin (CH); Weidmann, Lukas, 4133 Pratteln (CH); Landis, Julian, 4058 Basel (CH)
(74) Vertreter: Braunpat AG

(57) **Zusammenfassung**

Die Erfindung betrifft eine Spannvorrichtung und ein Spannsystem mit der Spannvorrichtung und einem Halter, der zumindest einen Spannhalter (8) umfasst, zum Ein- und/oder Ausspannen eines Werkzeugs in den Halter mittels einer relativen axialen Bewegung eines ersten Spannelements (2) und eines zweiten Spannelements (4) der Spannvorrichtung. Das erste Spannelement (2) ist mit wenigstens einem ersten Kopplungselement (20) mittelbar oder unmittelbar an einen Werkzeugschaft (10) des Werkzeugs und das zweite Spannelement (4) ist mit wenigstens einem zweiten Kopplungselement (22) an den Spannhalter (8) koppelbar. Das erste Spannelement (2) weist eine Werkzeugseite (2a), auf der das Werkzeug zu liegen kommt, und eine axial gegenüberliegende Spannseite (2b), auf der ein Spannantrieb vorgesehen ist, auf. Die Werkzeugseite (2a) ist frei von Bauelementen der Spannvorrichtung, Insbesondere frei von Bauelementen des Spannantriebs, der zum Antreiben des zweiten Spannelements (4) relativ zum ersten Spannelement (2) entlang einer Bewegungslängsachse (LA) ausgebildet ist. Mit der Spannvorrichtung und dem Spannsystem können auch Werkzeuge mit weit auskragenden, bzw. stark abgesetzten Werkzeugköpfen in den Halter eingespannt werden.

## Beschreibung

### Technisches Gebiet der Erfindung

Die Erfindung betrifft eine Spannvorrichtung zum Einspannen und/oder Ausspannen eines Werkzeugs in einen Halter, insbesondere eine Spannvorrichtung zur relativen axialen Bewegung einer das Werkzeug aufnehmenden Spannzange und eines die Spannzange aufnehmenden Spannhalters insbesondere eine Spannvorrichtung zur relativen axialen Bewegung zwischen koaxial angeordneter Spannzange und Spannhalter durch hohen Pressdruck.

### Stand der Technik

Für Zerspanungsprozesse im metallverarbeitenden Gewerbe und der Industrie kommen eine Vielzahl unterschiedlicher Werkzeuge zum Einsatz, die zum Gebrauch an meist elektrisch betriebene Werkzeugmaschinen angeschlossen werden. Beispielsweise werden Werkzeuge zum Sägen, Fräsen, Schleifen, Bohren etc. in verschiedenen Grössen und Varianten verwendet. Zum Ein- und Ausspannen in eine Werkzeugmaschine weisen die Werkzeuge z. B. einen Schaft auf, der in einen Werkzeughalter eingesetzt wird, der wiederum an die Werkzeugmaschine koppelbar ist. Die Werkzeughalter weisen z. B. eine Spannzange auf, die an einem Werkzeugende eine Längsöffnung zum Einsetzen des Werkzeugschafts aufweist und an einem gegenüberliegenden Spannende von der Werkzeugmaschine aufgenommen werden. Beispielsweise ist die Spannzange koaxial in dem Spannhalter entlang einer Längsachse aufgenommen, die vorzugsweise mit einer Bewegungsachse des Werkzeugs und einer Antriebsachse der Werkzeugmaschine übereinstimmt. Ein Beispiel eines Werkzeughalters ist aus EP 1291103 B1 der Firma Rego-Fix bekannt.

Um das Werkzeug sicher im Werkzeughalter zu fixieren sind aus dem Stand der Technik unterschiedliche Methoden bekannt. In EP3866567A1 ist z. B. vorgesehen, ein Werkzeug durch Aufheizen eines Werkzeughalters aus Stahl einzuschrumpfen. Der Werkzeughalter wird mittels einer Induktionsspule erhitzt, so dass sich ein Innendurchmesser der Längsöffnung des Werkzeughalters aufgrund der Wärmeausdehnung des Stahls aufweitet und ein kalter Werkzeugschaft eingesetzt werden kann. Wird der Werkzeughalter wieder auf Raumtemperatur gekühlt, ergibt sich ein starker Presssitz, welcher das Werkzeug sicher hält. Aufgrund der Abmessung und Lage der erforderlichen Induktionsspule sowie der nachfolgenden Kühlglocke können beim Schrumpfen keine weit ausladenden Werkzeuge, die eine Struktur mit einem grossen Aussendurchmesser haben, in den Werkzeughalter gespannt werden. Ferner ist das Einspannen durch Aufschrumpfen langwierig, energieintensiv und nicht ungefährlich aufgrund der erforderlichen Temperierung des Werkzeughalters.

Weiter ist aus DE 102004016305 B4 der Firma Rego-Fix eine Pressvorrichtung zum Ein- und Auspressen einer Spannzange in einen Spannhalter bekannt, bei welcher die Längsöffnung der Spannzange mit dem darin eingesetzten Werkzeug durch axiales Einpressen in den Spannhalter verengt wird. Hierzu ist ein Aussendurchmesser der Spannzange konisch ausgebildet und wird z. B. hydraulisch relativ zum Spannhalter axial verschoben, so dass er gegen einen Innenumfang des Spannhalters gepresst und verkleinert wird. Hierfür werden der Spannhalter und die darin aufgenommene Spannzange in ein feststehendes Gehäuse eingesetzt. Im Gehäuse wird der Spannhalter fixiert und eine relativ zum Gehäuse axial bewegliche Pressplatte setzt an der Spannzange an. Mittels eines Pressantriebs wird die Pressplatte relativ zum Gehäuse verschoben. Der Pressantrieb ist innerhalb des Gehäuses vorgesehen. Beispielsweise sind mehrere Hydraulikzylinder um eine Aufnahme gelagert, in der die Spannzange und der Spannhalter aufgenommen sind.

Dabei bilden das Gehäuse, der Pressantrieb und sonstige Bauteile der Pressvorrichtung, die um die Spannzange zu liegen kommen, eine werkzeugseitige Störkontur im Umfeld der Spannzange und das Einsetzen von Werkzeugen mit grossem Aussendurchmesser in die Spannzange wird behindert. Es können daher nur Werkzeuge ohne weit auskragenden Werkzeugaussendurchmesser, insbesondere Werkzeuge mit einem schmalen Schaft, verwendet werden, die in dem begrenzten Raum der Pressvorrichtung Platz finden.

Es ist daher die Aufgabe der vorliegenden Erfindung, eine Spannvorrichtung zum Ein- und/oder Ausspannen eines Werkzeugs in einen Halter zu schaffen, die ein schnelles und sicheres Einspannen unterschiedlicher Werkzeuge erlaubt, eine wiederholt präzise Positionierung ermöglicht, und einfach zu bedienen ist.

### Zusammenfassung der Erfindung

Diese Aufgabe wird erfindungsgemäss durch eine Spannvorrichtung zum Ein- und/oder Ausspannen eines Werkzeugs in einen Halter nach Anspruch 1 und ein Spannsystem mit einer solchen Spannvorrichtung und einem Halter für ein Werkzeug zum Ein- und/oder Ausspannen des Werkzeugs in den Halter nach Anspruch 12 gelöst. Vorteilhafte Ausgestaltungen und unterschiedliche Ausführungsformen der Erfindung gehen aus den Unteransprüchen hervor.

Bei einer erfindungsgemässen Spannvorrichtung und einem erfindungsgemässen System mit einer solchen Spannvorrichtung zum Ein- und/oder Ausspannen eines Werkzeugs in einen, beziehungsweise aus einem Halter für das Werkzeug, umfasst der Halter zumindest einen Spannhalter, an den ein Werkzeug Schaft des Werkzeugs direkt oder indirekt einsetzbar ankoppeln kann. Bei einer ersten Variante des Halters koppelt der Spannhalter direkt beispielsweise an einen Aussenumfang des Werkzeugschafts an und der Spannhalter ist mittels einer axialen Bewegung entlang einer Bewegungslängsachse relativ zum Werkzeugschaft beweglich. Bei einer zweiten Variante des Halters weist dieser neben dem Spannhalter eine Spannzange auf, wobei der Spannhalter und die Spannzange mittels einer relativen axialen Bewegung entlang der Bewegungslängsachse zueinander beweglich sind. Der Werkzeugschaft ist in einem Werkzeugende der Spannzange aufnehmbar und die Spannzange ist an einem dem Werkzeugende gegenüberliegenden Spannende koaxial in dem Spannhalter aufnehmbar, sodass der Spannhalter indirekt über die Spannzange am Aussenumfang des Werkzeugschafts ankoppelt.

Nach der vorliegenden Erfindung ist ein erstes Spannelement und ein zweites Spannelement vorgesehen, die zueinander entlang der Bewegungslängsachse axial beweglich gelagert sind. Das erste Spannelement ist mit wenigstens einem ersten Kopplungselement mittelbar oder unmittelbar an den Werkzeugschaft des Werkzeugs koppelbar. Das heisst, das erste Kopplungselement kann beispielsweise unmittelbar am Werkzeugschaft angreifen oder mittelbar über die Spannzange an den Werkzeugschaft ankoppeln. Das zweite Spannelement ist mit wenigstens einem zweiten Kopplungselement an den Spannhalter koppelbar. Die Spannzange weist ein Werkzeugende mit einer Längsöffnung, in welche der Werkzeugschaft aufnehmbar ist, und ein dem Werkzeugende gegenüberliegendes Spannende auf, wobei die Spannzange mit dem Spannende koaxial in dem Spannhalter aufnehmbar ist. Alternativ weist der Werkzeugschaft ein Spannende auf, mit dem der Schaft koaxial in dem Spannhalter aufnehmbar ist. Dem Spannende gegenüberliegend ist ein Werkzeugkopf am Werkzeugende des Werkzeugschafts vorgesehen.

Erfindungsgemäss weist das erste Spannelement eine Werkzeugseite, auf der das Werkzeug, bzw. der Werkzeugkopf, beim Ein-/Ausspannen zu liegen kommt, und eine axial gegenüberliegende Spannseite, auf der ein Spannantrieb vorgesehen ist, auf. Der Spannantrieb ist zum Antreiben des zweiten Spannelements relativ zum ersten Spannelement entlang der Bewegungslängsachse vorgesehen und setzt hierfür am zweiten Spannelement an. Dabei koppelt vorteilhaft das erste Spannelement mit dem ersten Kopplungselement derart an der Spannzange oder dem Werkzeugschaft an, dass das Werkzeugende von Spannzange, bzw. Werkzeugschaft zur Werkzeugseite ausgerichtet ist und das Spannende von Spannzange, bzw. Werkzeugschaft auf der Spannseite zu liegen kommt. Der Spannantrieb ist ausschliesslich auf der Spannseite des ersten Spannelements vorgesehen und die Werkzeugseite ist frei von Bauelementen der Spannvorrichtung, insbesondere frei von Bauelementen des Spannantriebs.

Bei einer Spannvorrichtung nach der vorliegenden Erfindung entsteht keine Störstruktur im Umfeld des Werkzeugendes des Werkzeugschafts, bzw. der Längsöffnung der Spannzange durch Bauelemente des Spannantriebes oder andere Bauelemente der Vorrichtung und somit können auch Werkzeuge mit grossem Durchmesser in einfacher und sicherer Weise in den Halter eingespannt werden. Dabei ist kein weit auskragender Werkzeugschaft erforderlich, wie es bei einer Spannvorrichtung nach dem Stand der Technik nötig wäre. Das heisst, der Werkzeugschaft muss in eingesetztem Zustand nicht wesentlich über den Spannhalter, bzw. die Spannzange hervorstehen, so dass eine Verlängerung des Werkzeugs vermieden wird. Beispielsweise kann der Werkzeugschaft mit weniger als 20%, vorzugsweise weniger als 10% und besonders vorteilhaft weniger als 5% seiner Länge über den Halter hervorstehen, wenn das Werkzeug eingespannt ist.

Mit Hilfe der Spannvorrichtung nach der Erfindung können sogar Werkzeuge in den Halter eingespannt werden, deren Durchmesser über den Durchmesser der Spannvorrichtung hinausgeht, ohne dass beim Ein- oder Auspressen das Risiko einer Kollision zwischen Spannvorrichtung und Werkzeug besteht. Ferner wird die Positionierung des Werkzeugs unterstützt, um die Entstehung von Unwuchten und Vibrationen beim Betrieb zu vermeiden.

Vorteilhaft weist das erste Spannelement und vorzugsweise auch das zweite Spannelement jeweils einen Aufnahmebereich zum Aufnehmen des Werkzeugschafts oder der Spannzange, bzw. des Spannhalters entlang einer zentralen Achse der Aufnahmebereiche auf, wobei die zentrale Achse der Bewegungslängsachse entspricht. Der Aufnahmebereich der Spannzange und des Spannhalters weisen somit eine gemeinsame zentrale Achse auf, die mit der Achse des Werkzeugschafts übereinstimmt. Beispielsweise weist das Spannelement eine kreisförmige Öffnung oder Aussparung auf, in welche der Werkzeugschaft oder die Spannzange, bzw. der Spannhalter, eingesetzt werden können und dort z. B. von den Kopplungselementen sicher gehalten werden.

Wie oben erläutert, kann der Halter des erfindungsgemässen Spannsystems eine Spannzange mit einem Werkzeugende zur Aufnahme des Werkzeugschafts in einer Längsöffnung und ein Spannende aufweisen. Vorteilhaft kann der Halter z. B. eine Spannzange mit einem sich konisch vom Werkzeugende zum Spannende hin verjüngenden Aussenumfang aufweisen. Alternativ kann sich der Werkzeugschaft konisch vom Werkzeugende zum Spannende hin verjüngen.

Der Spannhalter kann einen kreisförmigen Aufnahmebereich als Hülsenaufnahme zur Aufnahme des Aussenumfangs der Spannzange aufweisen, dessen Durchmesser kleiner ist als ein Durchmesser der Spannzange oder des Werkzeugschafts an deren Werkzeugende. Die Hülsenaufnahme kann z. B. auch durch eine Innenwandung des Spannhalters gebildet werden. Die Spannzange, bzw. der Werkzeugschaft können mit dem Spannende koaxial in der Hülsenaufnahme aufgenommen werden.

In einer Ausführungsform der Spannvorrichtung nach der vorliegenden Erfindung ist der Spannantrieb als Linearantrieb zum Antrieb einer Linearbewegung zwischen Werkzeugschaft, bzw. Spannzange und Spannhalter entlang der Bewegungslängsachse ausgebildet. Der Linearantrieb kann beispielsweise mechanisch, elektrisch, pneumatisch oder hydraulisch ausgebildet sein. Wesentlich ist dabei, dass jegliche Bauteile des Linearantriebs, wie Druckkolben, Führungszylinder, Leitungssysteme, elektrische Bauteile, Antriebswellen, etc., die eine Störstruktur auf der Werkzeugseite des ersten Spannelements bilden könnten, auf der Spannseite des ersten Spannelements angeordnet sind. Insbesondere bei Spannvorrichtungen, welche den Werkzeugschaft, bzw. die Spannzange und den Spannhalter unter hohem Druck zusammenpressen oder voneinander trennen, werden hydraulische, elektrische oder pneumatische Linearantriebe verwendet. Dabei sind deren Spannkolben und Spannzylinder ausschliesslich auf der Spannseite des ersten Spannelements vorgesehen, damit das Werkzeugende des Werkzeugschafts, bzw. der Spannzange leicht zugänglich bleibt und nicht durch eine Störstruktur beeinträchtigt wird.

In einer Ausführungsform der Spannvorrichtung nach der Erfindung weist der Spannantrieb wenigstens einen Spannkolben auf. Der Spannantrieb ist vorzugsweise hydraulisch, elektrisch oder pneumatisch ausgebildet. Beispielsweise wird ein Spannkolben von einem Druckkolben, der in einem Druckzylinder geführt ist, gebildet. Der Spannkolben ist auf der Spannseite des ersten Spannelements gelegen und greift wenigstens an das zweite Spannelement an, um dieses in Richtung des ersten Spannelements zu bewegen. Das erste Spannelement kann auch unmittelbar an den Spannkolben gekoppelt sein. Dieser liegt somit zumindest annähernd unmittelbar zwischen dem ersten und dem zweiten Spannelement. Oder das erste Spannelement kann relativ zum Spannkolben beispielsweise mittels eines Gehäuses, einer Basis, Verstrebungen oder dergleichen in der Spannvorrichtung fixiert sein und somit mittelbar mit dem Spannkolben gekoppelt sein, der ebenfalls relative zum Gehäuse, der Basis, etc. festgehalten ist. Der Spannkolben kann somit auch auf der Seite des zweiten Spannelements liegen, die vom ersten Spannelement abgewandt ist. Es können zum Beispiel zwei oder mehrere Spannkolben derart am zweiten Spannelement angreifen, dass sie symmetrisch um den Halter verteilt sind. Weitere Bauelemente zum Betrieb des Spannantriebs können z. B. ebenfalls am zweiten Spannelement oder auch an einem Gehäuse, einer Basis, etc. der Spannvorrichtung im Bereich der Spannseite des ersten Spannelements angeordnet sein. Der Spannantrieb kann flexibel innerhalb der Spannvorrichtung ausgestaltet und angeordnet werden und einen hohen Druck zum sicheren Fixieren des Werkzeugs im Halter bereitstellen.

In einer anderen Ausführungsform der Spannvorrichtung nach der Erfindung kann der Spannantrieb als Drehantrieb ausgebildet sein. Eine Drehbewegung des Drehantriebs kann mittels einer Übersetzungseinrichtung zwischen dem Drehantrieb und dem ersten Spannelement und/oder zweiten Spannelement in eine Linearbewegung des ersten Spannelements und/oder des zweiten Spannelements übersetzt werden. Die Übersetzungseinrichtung weist z. B. eine Gewindeverbindung auf, welche die Drehbewegung entsprechend einer Gewindesteigung des Gewindes in eine Linearbewegung umsetzt.

In einer Ausführungsform der Spannvorrichtung nach der vorliegenden Erfindung ist das wenigstens eine erste, bzw. zweite Kopplungselement radial zur Längsachse im Aufnahmebereich des ersten, bzw. zweiten Spannelements ausgerichtet. Beispielsweise ist das Kopplungselement der Spannelemente als von einem Umfang des Aufnahmebereichs radial zur Längsachse hin vorstehender Absatz, Vorsprung, Lippe, Nut oder Bund ausgestaltet. Das wenigstens eine erste, bzw. zweite Kopplungselement koppelt an ein Kopplungsgegenelement an der Spannzange / dem Werkzeugschaft, bzw. dem Spannhalter derart an, dass das erste Spannelement, bzw. das zweite Spannelement relative zur Spannzange / zum Werkzeugschaft, bzw. zum Spannhalter in der Einspann- und/oder Ausspannrichtung fixiert ist. Das Kopplungsgegenelement ist komplementär zum Kopplungselement ausgebildet. Es kann als Gegenstück radial abstehend an einem Umfang der Spannzange / des Werkzeugschafts, bzw. des Spannhalters in Form eines vorstehenden Absatzes, Vorsprungs, Lippe, Nut oder Bund ausgestaltet sein. Insbesondere sind die Spannzange, bzw. der Werkzeugschaft und der Spannhalter durch die Kopplungselemente gegen ein Verschieben und/oder Verdrehen gesichert. In einer Variante bildet das wenigstens eine erste, bzw. zweite Kopplungselement einen Axialanschlag und das Kopplungsgegenelement einen axialen Gegenanschlag, z. B. im Fall eines Linearantriebs der Spannvorrichtung. In einer anderen Variante bildet das wenigstens eine erste, bzw. zweite Kopplungselement einen Rotationsanschlag und das Kopplungsgegenelement bildet einen Rotationsgegenanschlag, z. B. im Fall eines Drehantriebs der Spannvorrichtung. Vorteilhaft ist das Kopplungsgegenstück am Werkzeugende, bzw. am Kopf, der Spannzange, bzw. des Werkzeugschafts vorgesehen, so dass der Aussenumfang um den Aufnahmebereich der Spannzange, bzw. der Bereich um das Werkzeugende des Werkzeugschafts überwiegend freibleibt, um mit dem Spannhalter zusammenzuwirken.

In einer Weiterbildung der Spannvorrichtung nach der Erfindung steht das wenigstens eine erste Kopplungselement radial in den Aufnahmebereich des ersten Spannelement vor und weist eine zur Spannseite hin orientierte Einspannkopplungsfläche und eine zur Werkzeugseite hin orientierte Ausspannkopplungsfläche auf. Beispielsweise ist das Kopplungselement als ein um einen Umfang des Aufnahmebereichs umlaufender Bund oder Steg vorgesehen, der an gegenüberliegenden Seiten eine Ein-, bzw. Ausspannkopplungsfläche aufweist. Ein Kopplungsgegenstück an Spannzange, bzw. Werkzeugschaft, das z. B. radial von deren Aussenumfangsfläche vorsteht, kann beim Einspannen des Werkzeugs in den Halter an der Einspannkopplungsfläche und beim Ausspannen des Werkzeugs aus dem Halter an der Ausspannkopplungsfläche anschlagen. Dabei kann die jeweils andere Fläche beim Ein-/Auspressen frei bleiben. Durch die sich gegenüberliegende Einspannkopplungsfläche und Ausspannkopplungsfläche des Kopplungselements am ersten Spannelement zum Ankoppeln an der Spannzange, bzw. dem Werkzeugschaft wird ein Einsetzen des Werkzeugs in die Spannvorrichtung vereinfacht.

In noch einer Weiterbildung der Spannvorrichtung nach der Erfindung ist ein zweites Kopplungselement am zweiten Spannelement als radial in den Aufnahmebereich des zweiten Spannelements ragendes Eingriffsmittel zum Eingreifen in einen Aussenumfang des Spannhalters ausgebildet. Das Eingriffsmittel bildet eine Art Adapter, der den Spannhalter im zweiten Spannelement festhält. Das Eingriffsmittel ist beispielsweise in Form von zwei oder mehr vorstehenden Stiften oder Vorsprüngen vorgesehen. Vorteilhaft greift das Eingriffsmittel in ein als Nut oder Aussparung im Aussenumfang des Spannhalters ausgebildetes Kopplungsgegenstück ein. Das Eingriffsmittel ist z. B. an einem oberen, dem ersten Spannelement zugewandten Ende des Aufnahmebereichs des zweiten Spannelements vorgesehen, so dass der Werkzeugschaft, bzw. die Spannzange und ein darin eingesetztes Werkzeug durch das Eingriffsmittel hindurch ragen, wenn der Werkzeugschaft, bzw. die Spannzange in dem Spannhalter aufgenommen ist.

In einer vorteilhaften Ausgestaltung sind die am ersten Spannelement und/oder zweiten Spannelement vorgesehenen Kopplungselemente zum Ankoppeln an die Spannzange oder den Werkzeugschaft, bzw. den Spannhalter radial beweglich in der Spannvorrichtung, insbesondere am ersten Spannelement, bzw. zweiten Spannelement gelagert. Die Kopplungselemente können damit zum Festsetzen und Freigeben des Werkzeugschafts, bzw. der Spannzange und des Spannhalter relative zu den Kopplungsgegenelementen radial verfahren werden, um eine Kopplungsposition herzustellen oder aufzulösen. Die radiale Bewegung kann z. B. durch ein Verschieben oder Verschwenken der Kopplungselemente manuell oder maschinell erfolgen.

In einer weiteren Ausführungsform der Spannvorrichtung nach der vorliegenden Erfindung sind das erste Spannelement, bzw. das zweite Spannelement jeweils zweiteilig als zueinander bewegliche Spannbauteile ausgebildet. Die Spannbauteile können z. B. als Schalenteile, insbesondere als Halbschalen, ausgebildet sein. In einer geschlossenen Position bilden die Spannbauteile eine Aufnahmeposition, in der sie gemeinsam den Aufnahmebereich des ersten, bzw. zweiten Spannelements für die Spannzange, bzw. den Spannhalter bilden. In der Aufnahmeposition sind die Spannzange, bzw. der Spannhalter vorzugsweise zumindest grösstenteils am Aussenumfang von den Spannbauteilen umschlossen. In einer geöffneten Position bilden die Spannbauteile eine Freigabeposition, in welcher die Spannzange und der Spannhalter relative zum ersten, bzw. zweiten Spannelement freibeweglich sind. In einer Variante sind die Spannbauteile z. B. um eine gemeinsame Achse schwenkbar zueinander ausgebildet. Dabei können die Spannbauteile des ersten Spannelements und die Spannbauteile des zweiten Spannelements die gleiche Schwenkachse aufweisen. In einer anderen Variante können die Spannbauteile als getrennte Teile vorgesehen sein, die zur Ausbildung der Aufnahmebereiche des ersten und zweiten Spannelements um die Spannzange, bzw. den Spannhalter gelegt und miteinander verbunden werden.

In noch einer weiteren Ausführungsform der Spannvorrichtung nach der vorliegenden Erfindung weist das erste Spannelement auf der Spannseite eine erste Führungseinrichtung auf, die mit einer zweiten Führungseinrichtung am zweiten Spannelement derart zusammenwirkt, dass die relative axiale Bewegung des ersten Spannelement und zweiten Spannelements geführt ist. Beispielsweise erstrecken sich Führungsstreben oder -flächen vom ersten Spannelement von der Spannseite in Richtung des zweiten Spannelements, die mit Gleitmitteln oder Gleitflächen am zweiten Spannelement zusammenwirken. Vorteilhaft ist es auch möglich, dass die Führungseinrichtung durch die Kopplungselemente am ersten, bzw. zweiten Spannelement gebildet sind. Im Fall eines Drehantriebs kann z. B. eine Gewindeführung vorgesehen sein.

Zusammengefasst sind verschiedene Lösungen vorgeschlagen, durch welche die Spannvorrichtung auf einer Seite, aus der das Werkzeug hervorsteht, wenn der Halter eingesetzt ist, frei von störenden Bauteilen ist, die das Einspannen von breiten, ausladenden Werkzeugen behindern könnten. Derartige Werkzeuge und natürlich auch schmale Werkzeuge mit geringem Durchmesser können schnell und exakt mit der Spannvorrichtung in den Halter eingespannt werden. Das Spannsystem ist einfach zu bedienen und beugt einer Fehlbedienung vor. Beim Einsatz der im Halter gehaltenen Werkzeuge erfolgt eine präzise Bearbeitung des Materials und ein Verschleiss durch Vibrationen wird vermieden.

### Kurzbeschreibung der Zeichnungen

Die Erfindung wird im Folgenden anhand der Figuren dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:

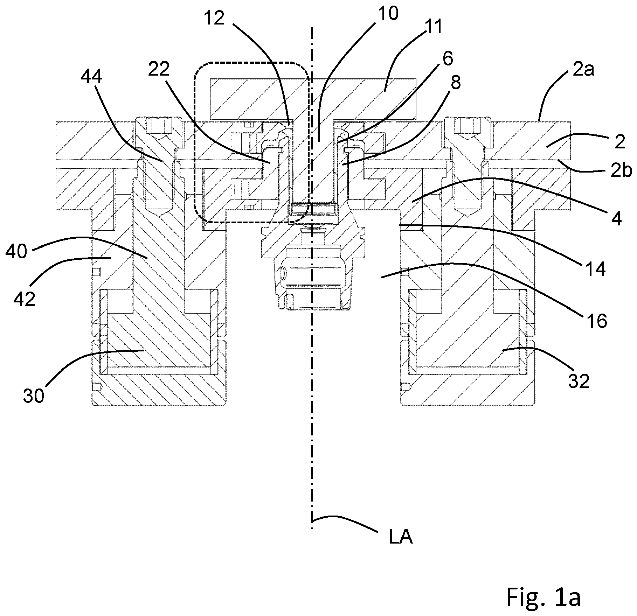

Fig. 1a: eine Ausführungsform eines Spannsystems mit einer Spannvorrichtung und einem Halter für ein Werkzeug zum Ein- und/oder Ausspannen des Werkzeugs in den Halter nach der vorliegenden Erfindung in einer Einspannposition;
Fig. 1 b: das Spannsystem aus Figur 1a in einer Detailansicht des ersten und zweiten Kopplungselements in der Einspannposition;
Fig. 2a: das Spannsystem nach Figur 1a in einer Ausspannposition;
Fig. 2b: das Spannsystem aus Figur 2a in einer Detailansicht des ersten und zweiten Kopplungselements in der Ausspannposition; und
Fig. 3: das Spannsystem aus den Figuren 1a und 2a in einer geschlossenen und verriegelten Position.

### Bevorzugte Ausführungsformen der Erfindung

Bestimmte Ausdrücke werden in der folgenden Beschreibung aus praktischen Gründen verwendet und sind nicht einschränkend zu verstehen. Die Wörter "rechts", "links", "über", "unter", "unten", "oben", etc. sollen Richtungen in den Figuren und räumliche Anordnungen von Bauteilen, auf die Bezug genommen wird, bezeichnen.

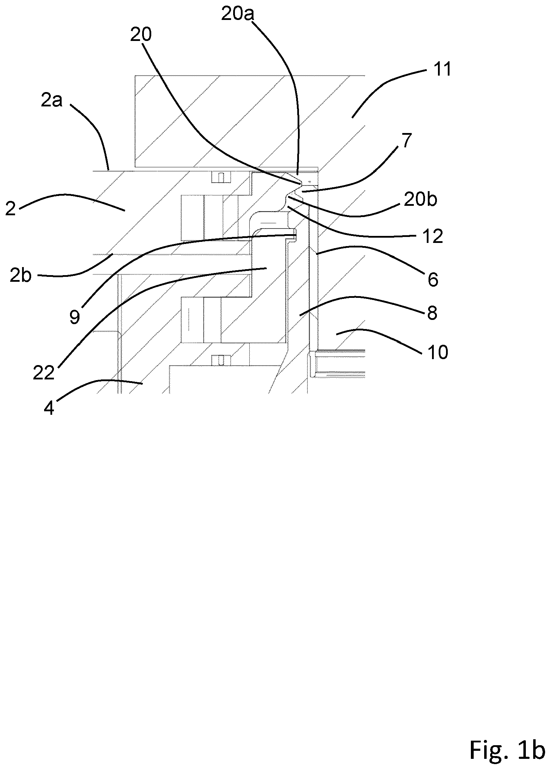

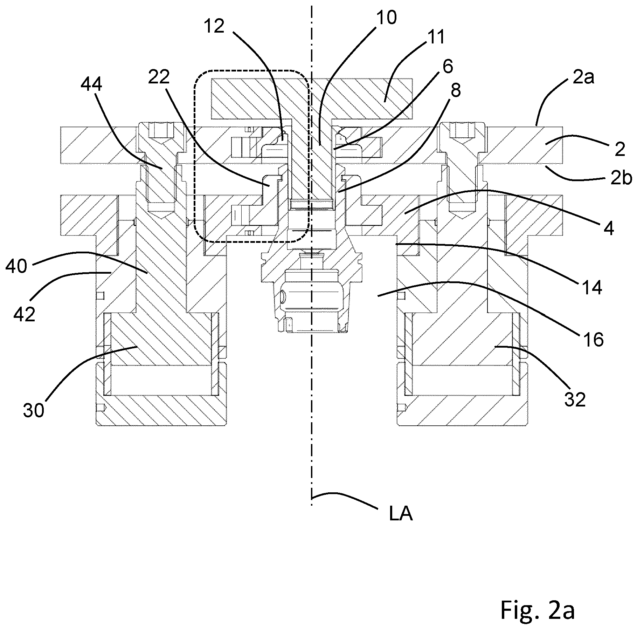

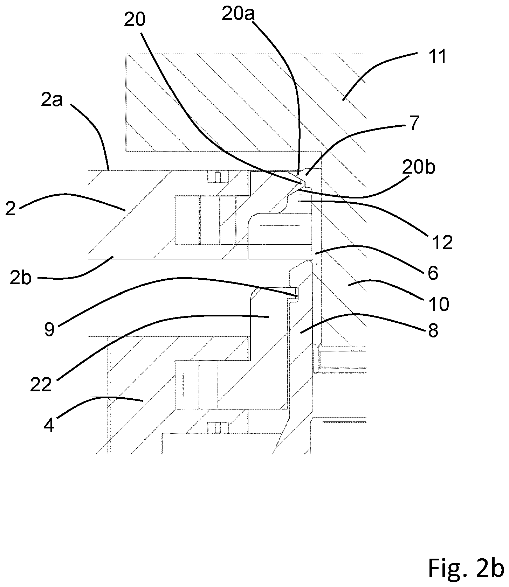

Figuren 1a, 1b, 2a und 2b zeigen eine Ausführungsform eines Spannsystems nach der vorliegenden Erfindung, das eine Spannvorrichtung mit einem ersten Spannelement 2 und einem zweiten Spannelement 4 sowie einen Halter für ein Werkzeug, der eine Spannzange 6 und einen Spannhalter 8 aufweist. Das erste Spannelement 2, auch Hülsenhalter genannt, ist in dieser Ausführungsform flach als eine Art Spannplatte oder Pressplatte ausgebildet und weist eine zeichnerisch nach oben ausgerichtete Werkzeugseite 2a und eine nach unten ausgerichtete Spannseite 2b auf, die der Werkzeugseite 2a gegenüber liegt. Weiter weist das erste Spannelement 2 einen ersten Aufnahmebereich 12 in Form eines kreisförmigen Durchgangs auf, durch den sich das Werkzeug und der Halter erstrecken können. Das zweite Spannelement 4 ist als röhren- oder hülsenartiges Spannelement mit einer Umfangswand 14 und einer zum ersten Spannelement hin ausgerichteten Öffnung ausgebildet. Innerhalb der Umfangswand 14 weist es einen zweiten Aufnahmebereich 16 für die Spannzange und den Spannhalter auf, der sich durch die Öffnung erstrecken kann.

Die Spannzange 6 weist an einem oben dargestellten Werkzeugende eine nach oben offene Längsöffnung auf, in der ein Schaft 10 eines Werkzeugs aufgenommen ist. Ein Werkzeugkopf 11, von dem der Schaft 10 abragt, kommt auf der Werkzeugseite 2a zu liegen. An einem unten dargestellten, dem Werkzeugende gegenüberliegenden Spannende ist die Spannzange 6 in einer Hülsenaufnahme des Spannhalters 8, die ebenfalls als langgestreckte Öffnung ausgebildet ist, koaxial aufgenommen. In den Figuren 1 und 2 ragt der in der Spannzange 6 aufgenommene Werkzeugschaft 10 gemeinsam mit der Spannzange 6 in die Hülsenaufnahme des Spannhalters 8 hinein. Die Spannzange 6 weist an ihrem Werkzeugende einen radial von einer Aussenumfangsfläche abstehenden Kragen 7 auf, der als Anschlag dienen kann, wenn die Spannzange in den Spannhalter eingesetzt ist. Der Kragen 7 schlägt dann an einem oberen Ende des Spannhalters an. Es ist auch möglich, dass die Spannzange an einem Boden der Hülsenaufnahme des Spannhalters anschlägt.

Die Spannzange 6 ist im Wesentlichen röhrenartig ausgebildet, ist jedoch an ihrem Aussenumfang leicht konisch ausgebildet und verjüngt sich in Richtung des Spannendes. Der Innendurchmesser der Hülsenaufnahme des Spannhalters 8 ist derart an den Aussenumfang der Spannzange 6 angepasst, dass beim Einpressen der Spannzange in den Spannhalter der Durchmesser der Längsöffnung der Spannzange verringert wird, um den Werkzeugschaft festzuklemmen. Hierfür ist der Innendurchmesser der Hülsenaufnahme geringfügig kleiner als ein Aussendurchmesser im konischen Bereich der Spannzange. Die Durchmesser sind beispielsweise so ausgebildet, wie es in EP 1291103 B1 für eine Spannzange und einen Spannhalter beschrieben ist. Auch kann die Spannzange 6 in einer Umfangswand des konischen Bereichs Längsschlitze aufweisen, wie es dort beschrieben ist, um ein Festklemmen des Werkzeugschafts 10 zu erleichtern.

Die Spannvorrichtung ist zum Ein- und/oder Ausspannen des Werkzeugs in, bzw. aus dem Halter mittels einer relativen axialen Bewegung des ersten Spannelements 2 und des zweiten Spannelements 4 entlang einer Bewegungslängsachse LA ausgebildet.

Wie den Detailansichten aus den Figuren 1b und 2b zu entnehmen ist, ist hierfür das erste Spannelement 2 mit einem ersten Kopplungselement 20 an die Spannzange 6 gekoppelt. Das erste Kopplungselement 20 ist als um den Aufnahmebereich 12 umlaufender Vorsprung ausgebildet, der eine nach oben zur Werkzeugseite 2a ausgerichtete Fläche 20a und eine nach unten zur Spannseite 2b ausgerichtete Fläche 20b aufweist. In der dargestellten Ausführungsform sind die Flächen 20a und 20b schräg zur Längsachse ausgebildet. Beispielsweise ist das Kopplungselement 20 im Längsschnitt dreieckförmig oder trapezförmig. Das zweite Spannelement 4 weist ein zweites Kopplungselement 22 auf, das an den Spannhalter 8 ankoppelt. Das zweite Kopplungselement 22 ist als nach innen von der Umfangswand 14 in den Aufnahmebereich 16 vorstehender umlaufender Steg ausgebildet. Der Spannhalter 8 weist am Aussenumfang eine umlaufende Nut 9 auf, in die das zweite Kopplungselement 22 einkoppeln kann. Das zweite Kopplungselement 22 und die umlaufende Nut 9 sind an einem oberen zum ersten Spannelement 2 orientierten Ende des zweiten Spannelements 4, bzw. des Spannhalters 8 vorgesehen, so dass die Spannzange 6 und ein darin eingesetzter Werkzeugschaft 10 in zusammengesetztem Zustand durch diese hindurch ragen.

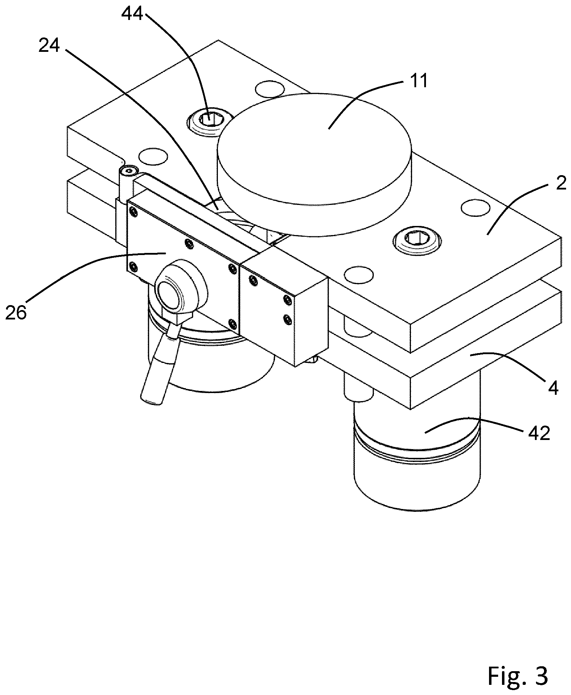

Wie in Figur 3 ersichtlich, sind in der dargestellten Ausführungsform der Spannvorrichtung das erste und zweite Spannelement 2 und 4 radial zur Längsachse LA zu einer Seite hin offen, so dass eine seitliche Öffnung 24 entsteht und der erste Aufnahmebereich 12 und der zweite Aufnahmebereich 16 zugänglich sind. Der Halter mit Spannhalter 8 und darin eingesetzter Spannzange 6 kann in die Spannvorrichtung eingesetzt werden, so dass das erste, bzw. zweite Spannelement 2, bzw. 4, mit der Spannzange 6, bzw. dem Spannhalter 8, wie oben beschrieben zusammenwirken. Die seitliche Öffnung 24 kann mit einer Verriegelung 26 geschlossen werden, so dass der Halter in der Spannvorrichtung sicher gehalten wird.

Alternativ können das erste und zweite Spannelement 2 und 4 zweiteilig als Halbschalen ausgebildet, die um eine Achse relativ zueinander schwenkbar sind. In geöffnetem Zustand sind der erste Aufnahmebereich 12 und der zweite Aufnahmebereich 16 seitlich offen und der Halter mit Spannhalter 8 und darin eingesetzter Spannzange 6 kann darin eingelegt werden. Dann können die Halbschalen geschlossen und mit einem Verschluss in geschlossenem Zustand gesichert werden. Alternativ, im Fall von einteiligen Spannelementen 2 und 4, können das erste Kopplungselement 20 und das zweite Kopplungselement 22 z. B. radial zur Bewegungslängsachse LA verschieblich in den Spannelementen gelagert sein, um an die Spannzange 6 und den Spannhalter 8 anzukoppeln.

Erfindungsgemäss ist auf der Spannseite 2b des ersten Spannelements 2 ein Spannantrieb vorgesehen, der am zweiten Spannelement 4 ansetzt und dieses relativ zum ersten Spannelement 2 axial entlang der Bewegungslängsachse LA bewegt. In der gezeigten Ausführungsform ist der Spannantrieb als Hydraulikeinrichtung zum linearen Antrieb der relativen axialen Bewegung zwischen erstem Spannelement und zweitem Spannelement vorgesehen. Die Hydraulikeinrichtung ist auf der Spannseite des ersten Spannelements vorgesehen. Ein erster Spannkolben 30 und ein zweiter Spannkolben 32 der Hydraulikeinrichtung sind an gegenüberliegenden Seiten der Spannzange 6 und des Spannhalters 8 unterhalb des zweiten Spannelements 4 vorgesehen, um dieses axial in Richtung des ersten Spannelements 2 zu verschieben. Das erste Spannelement 2 ist relativ zum zweiten Spannelement 4 fixiert, beispielsweise mittels Gehäuseelementen, so dass das zweite Spannelement 4 relativ dazu bewegt werden kann.

Wie in den Figuren 1a und 2a gezeigt, weist das erste Spannelement 2 auf der Spannseite 2b eine erste Führungseinrichtung 40 in Form eines Schafts auf. Im gezeigten Beispiel ist das erste Spannelement durch ein Befestigungsmittel 44 in Form einer Schraube mit der ersten Führungseinrichtung 40 fest verbunden. Das zweite Spannelement 4 weist eine zweite Führungseinrichtung 42 in Form eines Schaftzylinders auf. Das zweite Spannelement 4 ist mit der zweiten Führungseinrichtung 42 fest verbunden. Das zweite Spannelement 4 und die zweite Führungseinrichtung 42 könnten auch einstückig ausgebildet sein. Der Schaftzylinder der zweiten Führungseinrichtung 42 bildet mit seinem Aussenumfang eine Verlängerung der Umfangswand 14 des zweiten Spannelements. Die erste Führungseinrichtung 40 wirkt mit der zweiten Führungseinrichtung 42 derart zusammen, dass die relative axiale Bewegung des ersten Spannelements 2 und zweiten Spannelements 4 geführt ist. Im gezeigten Beispiel sind jeweils eine erste und eine zweite Führungseinrichtung auf gegenüberliegenden Seiten von Spannzange und Spannhalter vorgesehen. Es könnten aber mehr als zwei Paare von Führungseinrichtungen vorgesehen sein. Der Schaft und der Schaftzylinder sind passgenau ineinander aufgenommen, so dass kein radiales Spiel besteht, aber eine gleitende relative Bewegung möglich ist.

Die erste und die zweite Führungseinrichtung, wie der Schaft und der Schaftzylinder, können vorteilhaft Bestandteile des Spannantriebs sein. Wie in den Figuren 1a und 2 gezeigt ist, laufen die Spannkolben 30 und 32 in den Schaftzylindern der zweiten Führungseinrichtung 42 und bilden einen Bestandteil des Schafts der ersten Führungseinrichtung 42.

Erfindungsgemäss ist der Spannantrieb mit seinen zugehörigen Bauteilen, wie etwa den Spannkolben 30 und 32, auf der Spannseite 2b des ersten Spannelements 2 ausgebildet. Das erste Spannelement 2 ist mit dem ersten Kopplungselement 20 derart an der Spannzange 6 ankoppelt, dass das Werkzeugende der Spannzange 6 zur Werkzeugseite 2a ausgerichtet ist und das Spannende der Spannzange 6 auf der Spannseite 2b zu liegen kommt. Auf der Werkzeugseite 2a des ersten Spannelements 2 sind keine Bauteile der Spannvorrichtung vorgesehen, so dass diese Seite frei von störenden Elementen ist, die eine Störkontur bilden könnten. Der Werkzeugschaft 10 ragt kurz unterhalb der Werkzeugseite 2a in die Spannzange 6 hinein ohne hierfür weit auskragen zu müssen. Auch ein Werkzeug mit ausladendem Durchmesser findet dabei auf der Werkzeugseite 2a Platz. Das Werkzeug kann mit der Spannvorrichtung rasch und exakt in den Halter eingespannt werden.

Das Spannsystem nach der vorliegenden Erfindung ermöglicht einen hervorragenden Rundlauf und Vibrationsdämpfung eines eingespannten Werkzeugs, erlaubt einen schnellen und hitzefreien Werkzeugwechsel und ist mit geringen Investitionskosten realisierbar.

In den Figuren 1a und 1b ist der Halter in einer Einspannposition in die Spannvorrichtung eingesetzt. Dabei bildet die nach unten zur Spannseite 2b ausgerichtete Fläche 20b des ersten Kopplungselements 20 eine Einspannkopplungsfläche, die zur Spannseite des ersten Spannelements 2 hin orientiert ist (siehe Figur 1b und 2b). Der Kragen 7 der Spannzange 6 bildet ein Kopplungsgegenstück und schlägt mit seiner oberen Seite an der Einspannkopplungsfläche an. Gleichzeitig greift das zweite Kopplungselement 22 in Form des umlaufenden Stegs in die Nut 9 am Aussenumfang des Spannhalters 8 ein. Zum Einspannen des Werkzeugschafts 10 verschiebt der Spannantrieb das zweite Spannelement 4 entlang der Bewegungslängsachse LA in Richtung zum ersten Spannelement 2, das in der Spannvorrichtung fixiert ist. Dabei wird der Spannhalter 8 mit seinem Innenumfang entlang des konischen Aussenumfangs der Spannzange 6 verschoben, so dass sich der Aufnahmebereich verkleinert und den Werkzeugschaft einspannt. Das zweite Spannelement 4 wird verschoben bis das Ende des Spannhalters 8 gegen eine untere Seite des Kragens 7 anschlägt. Der Halter mit dem eingespannten Werkzeug ist bereit, um aus der Spannvorrichtung entnommen zu werden.

In den Figuren 2a und 2b ist der Halter in einer Ausspannposition in die Spannvorrichtung eingesetzt. Dabei bildet die nach oben zur Werkzeugseite 2a ausgerichtete Fläche 20a des ersten Kopplungselements 20 eine Ausspannkopplungsfläche, die zur Werkzeugseite des ersten Spannelements 2 hin orientiert ist. Der Kragen 7 der Spannzange 6 bildet wiederum ein Kopplungsgegenstück und schlägt mit seiner unteren Seite an der Ausspannkopplungsfläche an. Gleichzeitig greift der umlaufende Steg des zweiten Kopplungselements 22 in die Nut 9 des Spannhalters 8 ein. Zum Ausspannen des Werkzeugschafts 10 zieht der Spannantrieb das zweite Spannelement 4 entlang der Bewegungslängsachse LA vom ersten Spannelement 2 weg. Dabei wird der Spannhalter 8 von der Spannzange 6 gezogen, so dass sich der Aufnahmebereich aufweiten kann und der Werkzeugschaft freigegeben wird.

Die Spannvorrichtung und das Spannsystem nach der vorliegenden Erfindung wurden mittels der Figuren am Beispiel des Ein- und Ausspannens eines Werkzeugs aus einem Halter, der einen Spannhalter und eine Spannzange umfasst, erläutert. In diesem Fall koppelt das erste Kopplungselement über die Spannzange mittelbar am Werkzeugschaft an. Wie eingangs erwähnt, können die Spannvorrichtung und das Spannsystem aber auch für einen Halter vorteilhaft verwendet werden, in den ein Werkzeugschaft direkt in den Spannhalter eingesetzt wird und somit das erste Kopplungselement unmittelbar am Werkzeugschaft ankoppelt. Das erste Kopplungselement kann somit mittelbar oder unmittelbar an den Werkzeugschaft des Werkzeugs ankoppeln und das Werkzeug sicher im Halter einspannen. Für einen Fachmann ist es ohne weitere technische Ergänzungen möglich, das Konzept des Ankoppelns an einer Spannzange auf ein Ankoppeln an einem Werkzeugschaft zu übertragen.

### Bezugszeichenlegende

- 2: erstes Spannelement
- 2a: Werkzeugseite
- 2b: Spannseite
- 4: zweites Spannelement
- 6: Spannzange
- 7: Kragen
- 8: Spannhalter
- 9: Nut
- 10: Werkzeugschaft
- 11: Werkzeugkopf
- 12: erster Aufnahmebereich
- 14: Umfangswand
- 16: zweiter Aufnahmebereich
- 20: erstes Kopplungselement
- 20a: Fläche Werkzeugseite
- 20b: Fläche Spannseite
- 22: zweites Kopplungselement
- 24: Öffnung
- 26: Verriegelung
- 30: erster Spannkolben
- 32: zweiter Spannkolben
- 40: erste Führungseinrichtung
- 42: zweite Führungseinrichtung
- LA: Bewegungslängsachse

## Patentansprüche

1. Spannvorrichtung zum Ein- und/oder Ausspannen eines Werkzeugs in einen Halter, der zumindest einen Spannhalter (8) umfasst, mittels einer relativen axialen Bewegung eines ersten Spannelements (2) und eines zweiten Spannelements (4), wobei das erste Spannelement (2) mit wenigstens einem ersten Kopplungselement (20) mittelbar oder unmittelbar an einen Werkzeugschaft (10) des Werkzeugs und das zweite Spannelement (4) mit wenigstens einem zweiten Kopplungselement (22) an den Spannhalter (8) koppelbar ist,
**dadurch gekennzeichnet, dass**
das erste Spannelement (2) eine Werkzeugseite (2a), auf der das Werkzeug zu liegen kommt, und eine axial gegenüberliegende Spannseite (2b), auf der ein Spannantrieb vorgesehen ist, aufweist,
wobei der Spannantrieb ausschliesslich auf der Spannseite (2b) des ersten Spannelements (2) vorgesehen ist und die Werkzeugseite (2a) frei von Bauelementen der Spannvorrichtung ist, und
wobei der Spannantrieb zum Antreiben des zweiten Spannelements (4) relativ zum ersten Spannelement (2) entlang einer Bewegungslängsachse (LA) ausgebildet ist.

2. Spannvorrichtung nach einem der vorhergehenden Ansprüche, **dadurch gekennzeichnet, dass** der Spannantrieb als Linearantrieb zum Antrieb einer Linearbewegung zwischen erstem Spannelement (2) und zweitem Spannelement (4) ausgebildet ist.

3. Spannvorrichtung nach einem der vorhergehenden Ansprüche, **dadurch gekennzeichnet, dass** das erste Spannelement (2) und gegebenenfalls das zweite Spannelement (4) jeweils einen Aufnahmebereich (12; 16) zum mittelbaren oder unmittelbaren Aufnehmen des Werkzeugschafts (10), bzw. des Spannhalters (8) entlang einer zentralen Achse der Aufnahmebereiche (12; 16) aufweisen.

4. Spannvorrichtung nach einem der vorhergehenden Ansprüche, **dadurch gekennzeichnet, dass** das wenigstens eine erste Kopplungselement (20), bzw. zweite Kopplungselement (22) radial zur Längsachse im Aufnahmebereich (12; 16) ausgerichtet sind.

5. Spannvorrichtung nach einem der vorhergehenden Ansprüche, **dadurch gekennzeichnet, dass** das wenigstens eine erste Kopplungselement (20) radial in den Aufnahmebereich (12) vorsteht und eine am ersten Spannelement (2) zur Spannseite (2b) hin orientierte Einspannkopplungsfläche (20b) und eine zur Werkzeugseite (2a) hin orientierte Ausspannkopplungsfläche (20a) aufweist.

6. Spannvorrichtung nach einem der vorhergehenden Ansprüche, **dadurch gekennzeichnet, dass** das zweite Kopplungselement (22) am zweiten Spannelement (4) als radial in den Aufnahmebereich (16) ragendes Eingriffsmittel zum Eingreifen in einen Aussenumfang des Spannhalters (8) ausgebildet ist.

7. Spannvorrichtung nach einem der vorhergehenden Ansprüche, **dadurch gekennzeichnet, dass** am ersten Spannelement (2) und/oder zweiten Spannelement (4) vorgesehene Kopplungselemente (20; 22) zum Ankoppeln an den Werkzeugschaft (10), bzw. den Spannhalter (8), radial beweglich gelagert sind.

8. Spannvorrichtung nach einem der vorhergehenden Ansprüche, **dadurch gekennzeichnet, dass** das erste Spannelement (2), bzw. das zweite Spannelement (4) jeweils zweiteilig als zueinander bewegliche Spannbauteile ausgebildet sind.

9. Spannvorrichtung nach einem der vorhergehenden Ansprüche, **dadurch gekennzeichnet, dass** das erste Spannelement (2) auf der Spannseite (2b) eine erste Führungseinrichtung (40) aufweist, die mit einer zweiten Führungseinrichtung (42) am zweiten Spannelement derart zusammenwirkt, dass die relative axiale Bewegung des ersten Spannelements (2) und zweiten Spannelements (4) geführt ist.

10. Spannvorrichtung nach einem der vorhergehenden Ansprüche, **dadurch gekennzeichnet, dass** eine Hydraulikeinrichtung zum linearen Antrieb der relativen axialen Bewegung zwischen erstem Spannelement (2) und zweitem Spannelement (4) zwischen der Spannseite (2b) des ersten Spannelements (2) und einer zur Spannseite (2b) hin ausgerichteten Seite des zweiten Spannelements (4) vorgesehen ist.

11. Spannvorrichtung nach Anspruch 9 oder 10, **dadurch gekennzeichnet, dass** die erste Führungseinrichtung (40) und die zweite Führungseinrichtung (42) durch Spannkolben (30, 32) und Kolbenführungen des Spannantriebs gegeben sind.

12. Spannsystem aus Spannvorrichtung und Halter für ein Werkzeug zum Ein- und/oder Ausspannen des Werkzeugs in den Halter mittels einer relativen axialen Bewegung eines ersten Spannelements (2) und eines zweiten Spannelements (4) der Spannvorrichtung, **dadurch gekennzeichnet, dass** die Spannvorrichtung nach einem der Ansprüche 1 bis 11 ausgebildet ist.

13. Spannsystem nach Anspruch 12, **dadurch gekennzeichnet, dass** der Halter eine Spannzange (6) mit einem konisch zu einem Spannende der Spannzange (6) verjüngten Aussenumfang und einen Spannhalter (8) mit einer Hülsenaufnahme zur Aufnahme des Aussenumfangs der Spannzange (6) aufweist, wobei das Werkzeug in einem Werkzeugende der Spannzange (6) aufnehmbar ist und die Spannzange (6) an einem dem Werkzeugende gegenüberliegenden Spannende koaxial in dem Spannhalter (8) aufnehmbar ist.

14. Spannsystem nach Anspruch 12, **dadurch gekennzeichnet, dass** der Halter als ein Spannhalter (8) mit einer Hülsenaufnahme zur Aufnahme eines Aussenumfangs eines Werkzeugschafts (10) ausgebildet ist, wobei der Werkzeugschaft (10) von einem Werkzeugkopf (11) absteht und sich konisch zu einem Spannende hin verjüngt, wobei der Werkzeugschaft (10) mit dem Spannende koaxial in dem Spannhalter (8) aufnehmbar ist.
